Europäisches Patentamt

European Patent Office

Office européen des brevets

(11) Numéro de publication: **0 221 222**

**A1**

(12) **DEMANDE DE BREVET EUROPEEN**

(21) Numéro de dépôt: 85440056.1

(22) Date de dépôt: 02.10.85

(51) Int. Cl.⁴: **B60R 21/00**

(43) Date de publication de la demande:
13.05.87 Bulletin 87/20

(84) Etats contractants désignés:
BE CH DE GB IT LI LU NL

(71) Demandeur: **Vandamme, Georges**
**25 rue de l'Espérance**
**F-59100 Roubaix(Nord)(FR)**

(72) Inventeur: **Vandamme, Georges**
**25 rue de l'Espérance**
**F-59100 Roubaix(Nord)(FR)**

(74) Mandataire: **Lepage, Jean-Pierre**
**Cabinet Lepage & Aubertin Innovations et**
**Prestations 23/25, rue Nicolas Leblanc B.P.**
**1069**
**F-59011 Lille Cédex 1 (Nord)(FR)**

(54) **Dispositif destiné au compartimentage transversal d'une voiture automobile.**

(57) L'invention concerne des perfectionnements apportés à un dispositif notamment destiné au compartimentage transversal d'une voiture automobile.

Ce dispositif destiné à un véhicule présentant notamment des gouttières de toit, une portière arrière de coffre ou des montants de bâti compris entre les portières avant et arrière comporte un filet souple et est caractérisé par le fait qu'il comprend les mêmes moyens d'amarrage amovibles (17) et - (18) des coins supérieurs (3) et (4) du filet (1), soit aux gouttières du toit du véhicule, soit au joint de la portière arrière du coffre du véhicule, soit aux montants du bâti compris entre les portières avant et arrière et que ces moyens d'amarrage (17) et (18) sont uniques et dissociables.

Application à la réalisation d'un dispositif de compartimentage dont l'accrochage est universel.

FIG 1

EP 0 221 222 A1

## Dispositif destiné au compartimentage transversal d'une voiture automobile

La présente invention est relative à des perfectionnements apportés à un dispositif notamment destiné au compartimentage transversal d'une voiture automobile. Plus particulièrement, l'invention a pour objet des perfectionnements apportés aux moyens d'amarrage d'un tel dispositif.

Ce dispositif a pour objet un filet souple que l'on amarre transversalement dans l'habitacle d'un véhicule lorsque l'on veut par exemple séparer le conducteur d'un animal qu'il transporte.

Il existe actuellement des dispositifs de compartimentage transversal de l'habitacle d'un véhicule rigides constitués par exemple par une grille généralement fixée par des moyens qui prennent appui sur les parois latérales de l'habitacle.

Ces dispositifs ont l'inconvénient d'être rigides, de présenter un encombrement important même repliés et d'être difficilement adaptables à toutes dimensions d'habitacle.

D'autres dispositifs actuellement existants sont constitués par un filet quadrangulaire dont les mailles sont déformables dans la direction de ses deux médianes. Ce type de filet comprend par ailleurs des moyens pour adapter la surface qu'il définit principalement à la largeur du véhicule et des moyens d'amarrage de ses quatre coins à l'habitacle du véhicule.

Cependant, si ce type de filet remédie à certains inconvénients que présentent les dispositifs rigides, souplesse et encombrement réduit, ces dispositifs nécessitent pour leur fixation d'effectuer des perçages dans l'habitacle pour y placer des moyens d'amarrage.

On connaît aussi un autre dispositif comportant un filet souple et des moyens d'amarrage amovibles au joint de la portière arrière du coffre d'un véhicule.

Ce dispositif donne toute satisfaction mais il présente l'inconvénient de n'être utilisable que sur ce type de véhicule et de n'être fixé qu'à cet endroit.

Toutefois, il a paru intéressant de perfectionner ce dispositif en y apportant des modifications aux moyens d'amarrage des coins supérieurs du filet.

Un des buts de la présente invention est de proposer un dispositif notamment destiné au compartimentage transversal d'une voiture automobile qui présente l'avantage de pouvoir être adapté à différents types de véhicule quelle que soit leur configuration.

Un autre but de l'invention est de proposer un dispositif s'adaptant facilement dans l'habitacle du véhicule et pouvant en être facilement démonté grâce aux moyens d'amarrage amovibles.

Le dispositif notamment destiné au compartimentage transversal de l'habitacle arrière d'une voiture automobile présentant notamment des gouttières de toit, une porte arrière de coffre, des montants de bâti compris entre les portières avant et arrière en l'absence de gouttières comportant un filet souple, est caractérisé par le fait qu'il comprend des mêmes moyesn d'amarrage amovibles des coins supérieurs du filet soit aux gouttières du toit du véhicule, soit au joint de la porte arrière de coffre du véhicule, soit aux montants du bâti compris entre les portières avant et arrière et que ces moyens d'amarrage sont uniques et dissociables.

L'invention sera mieux comprise si l'on se réfère à la description ci-dessous ainsi qu'aux dessins en annexe qui en font partie intégrante.

La figure 1 représente le dispositif de compartimentage selon la présente invention dans une mise en oeuvre non limitative.

La figure 2 est relative au montage du présent dispositif dans un véhicule automobile présentant des gouttières de toit.

La figure 3 est relative au montage du présent dispositif dans un véhicule automobile présentant une porte arrière de coffre.

La figure 4 est relative à la dissociation des moyens d'amarrage du filet pour un véhicule présentant des montants de bâti compris entre les portières avant et arrière.

La figure 5 est relative au montage du présent dispositif dans un véhicule présentant des montants de bâti compris entre les portières avant et arrière.

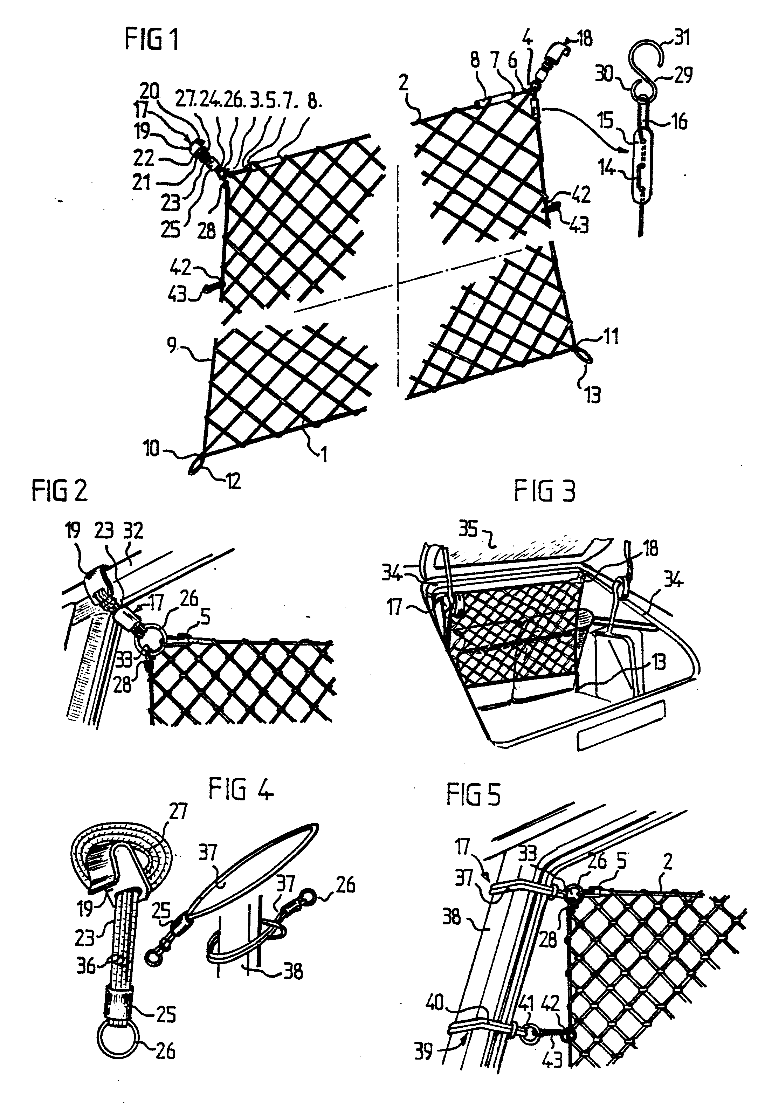

On a représenté en figure 1 l'exemple d'un filet 1 de forme sensiblement rectangulaire et constitué de mailles en losange dont les deux médianes sont sensiblement verticales et horizontales.

Le matériau qui constitue ces mailles est un matériau souple, et les losanges sont déformables, ce qui permet d'adapter le filet à la largeur du véhicule.

La variation de hauteur qui en résulte ne présente aucun inconvénient pour le rôle de protection joué par le filet pourvu que le côté inférieur de celui-ci soit situé à proximité immédiate du plancher ou du dossier des sièges.

Le contour de la forme que présente le filet est délimité dans sa partie supérieure par un cordon élastiquement extensible 2 dont la longueur est sensiblement égale à la largeur du filet et donc à la largeur de l'habitacle du véhicule. La longueur minimale de ce cordon élastiquement extensible, à l'état non tendu, est au moins inférieure à la largeur minimale des véhicules sur lesquels de tels dispositifs sont destinés à être montés.

Le cordon élastiquement extensible est engagé dans les mailles supérieures du filet dont il relie les coins supérieurs 3 et 4. Cette liaison peut être réalisée par des mousquetons 5 et 6, chaque extrémité du cordon élastiquement extensible étant fixée sur ces mousquetons par l'intermédiaire d'une boucle 7 et d'un manchon 8.

Les trois autres côtés du filet sont délimités par un cordon 9 sensiblement inextensible qui est enfilé dans les différentes mailles limitrophes du filet de manière à définir le contour de celui-ci.

Aux deux coins inférieurs du dispositif, le cordon sensiblement inextensible 9 traverse à coulissement libre par exemple deux anneaux respectivement 10 et 11 auxquels le filet est également fixé à chacun de ses coins inférieurs.

De ces deux anneaux partent deux éléments élastiquement extensibles respectivement 12 et 13 qui assurent l'amarrage du filet dans sa partie inférieure à l'habitacle du véhicule. Ces éléments sont par exemple des bracelets élastiques et peuvent être fixés par exemple aux articulations inférieures de la banquette arrière du véhicule ou aux articulations inférieures des sièges avant.

Dans un mode préférentiel de réalisation, à l'une de ses extrémités, le cordon sensiblement inextensible comporte des moyens permettant de régler sa longueur et de le tendre une fois que le dispositif est installé dans le véhicule. Ces moyens consistent en une plaque 14 percée de trous 15. L'extrémité du cordon 9 à proximité de laquelle est placé le tendeur 14 est fixée à ce tendeur. Le cordon est également enfilé au travers d'au moins deux des trous du tendeur de manière à décrire une boucle 16 au coins supérieur du filet. Ce tendeur permet donc d'une part de régler la longueur du cordon 9 de manière à l'adapter au mieux à la configuration de l'habitacle du véhicule et d'autre part de tendre ce cordon et donc d'assurer une bonne fixation de celui-ci.

Aux deux extrémités supérieures du filet se trouvent des dispositifs d'amarrage amovibles respectivement 17 et 18.

Dans un mode préférentiel de réalisation, ces dispositifs d'amarrage sont constitués chacun d'une part par un crochet plat 19 comportant une partie arrondie 20 et une partie plate 21 qui est percée dans sa partie centrale d'un trou 22 et d'autre part par un lien souple multibrin 23. A l'une des extrémités du lien 23 est fixé par l'intermédiaire d'une boucle sertie 24 protégée par un manchon amovible 25 un anneau 26. A l'autre extrémité du lien souple multibrin 23 est fixé un crochet 19 par un noeud 27 du type demi-clé renversée autour de la partie du crochet délimitée par l'extrémité de la partie plate 21 et par le trou 22.

Dans l'anneau 26, est placé le mousqueton 5 qui assure la liaison entre le dispositif d'amarrage 17 et le cordon extensible 2.

Naturellement, le dispositif d'amarrage 18 est identique au dispositif 17 de même c'est le mousqueton 6 qui vient en se plaçant dans l'anneau du dispositif 18 assurer la liaison entre le dispositif 18 et l'autre extrémité du cordon extensible 2.

Dans un mode préférentiel de réalisation, l'extrémité du cordon inextensible 9 et le coin supérieur du filet 3 sont fixés sur un dispositif 28.

De même, l'autre coin supérieur du filet 4 et la boucle 16 formée par le cordon inextensible 9 sont fixés sur un dispositif 29.

Les deux dispositifs 28 et 29 sont constitués par des crochets en S réalisés par exemple dans un matériau filiforme rigide. Une des boucles 30 du S est refermée, l'autre boucle 31 est ouverte.

Les boucles fermées de chaque crochet 28 et 29 sont utilisées pour la fixation des coins supérieurs 3 et 4 avec le cordon inextensible 9.

Les boucles ouvertes des crochets 28 et 29 assurent la liaison entre les coins supérieurs du filet 3 et 4 et les dispositifs d'amarrage 17 et 18.

Comme le montre la figure 2 dans le cas du montage du dispositif de compartimentage dans un véhicule automobile présentant des gouttières de toit, le crochet 19 du dispositif d'amarrage amovible 17 prend appui dans l'une des gouttières 32 du toit du véhicule tout en pouvant en être dégagée facilement en vue du démontage du filet.

Le crochet 19 est relié au coins supérieur 3 du filet par le lien souple multibrin 23 qui est pincé entre le bâti et la portière du véhicule et qui du fait de sa constitution vient s'y loger facilement.

L'accrochage du filet au dispositif 17 est réalisé par l'anneau 26, le mousqueton 5 et la boucle ouverte 33 du crochet en S 28.

Il en est de même pour l'autre côté du véhicule.

Les dispositifs 17 et 18 sont maintenus en place pendant l'ouverture des portières grâce à la traction opérée sur ceux-ci par le cordon extensible 2 qui réunit les anneaux 26 de chaque dispositif 17 et 18.

Comme le montre la figure 3, dans le montage du dispositif de compartimentage sur un véhicule automobile présentant une porte arrière de coffre, les dispositifs d'amarrage amovibles 17 et 18 montés de chaque côté du véhicule prennent appui sur le joint 34 de la porte arrière du coffre 35 du véhicule.

Le crochet 19 du dispositif 17 par sa partie arrondie 20 vient chevaucher le joint 34 lors du montage du dispositif de compartimentage dans le véhicule tout en pouvant en être dégagé facilement en vue du démontage du filet.

L'accrochage du filet au dispositif 17 est réalisé par l'anneau 26, le mousqueton 5 et la boucle ouverte 33 du crochet en S 28.

Il en est de même pour l'autre côté du véhicule.

Les dispositifs 17 et 18 se trouvent bloqués lors de la fermeture de la porte du coffre.

Comme le montre la figure 5 dans le cas du montage du dispositif de compartimentage dans un véhicule présentant des montants de bâti compris entre les portières avant et arrière, les dispositifs d'amarrage amovibles 17 et 18 montés de chaque côté du véhicule servent pour prendre prise sur les montants du bâti.

Comme le montre la figure 4 en dénouant le noeud 27 fait avec le lien multibrin souple 23 sur le crochet 19, on dissocie le crochet 19 du lien 23. En dépliant les brins 36 du lien multibrin 23, on obtient un lien souple plus long 37 qui constitue alors les dispositifs d'amarrage amovibles 17 et 18.

Ce lien 37 peut alors être enroulé et noué tel que représenté à la figure 5 autour du montant 38 du bâti compris entre les portières avant et arrière du véhicule tout en pouvant en être dégagé facilement lors du démontage du filet.

Ce lien 37 est pincé entre les portières du bâti du véhicule lorsque les portières sont fermées.

L'accrochage du filet au dispositif 17 est réalisé par l'anneau 26, le mousqueton 5 et la boucle ouverte 33 du crochet en S 28.

Il en est de même pour l'autre côté du véhicule.

Les dispositifs 17 et 18 sont maintenus en place pendant l'ouverture des portières grâce à la traction opérée sur ceux-ci par le cordon extensible 2 qui réunit les anneaux 26 de chaque dispositif 17 et 18.

D'autres dispositifs d'amarrage 39 identiques au dispositif 17 ou 18 en constitution et en mise en oeuvre peuvent être placés à différentes hauteurs de chaque montant du bâti. Ils sont composés d'un lien souple long 40 auquel est fixé un anneau 41. Sur le filet est noué à la même hauteur un anneau 42 qui reçoit un mousqueton 43.

Le filet est accroché au dispositif 39 par l'anneau 41 et le mousqueton 43, ceci de manière amovible pour pouvoir en être dégagé facilement lors du démontage du filet.

Cette disposition aura pour effet de mieux maintenir le filet dans l'habitacle et d'en épouser mieux sa forme.

Quel que soit le type de montage effectué suivant le type de véhicule, la partie inférieure du dispositif de compartimentage transversal de l'habitacle arrière du véhicule est fixée par exemple aux articulations inférieures du siège derrière lequel est fixé ce dispositif par l'intermédiaire de bracelets élastiques 12 et 13 tels que montrés à la figure 3.

Par ailleurs, le filet est tendu grâce au cordon élastiquement extensible 2 aux deux bracelets élastiques 12 et 13 et au tendeur 14 qui permet de régler la longueur du cordon inextensible 9.

Le dispositif selon la présente invention est facilement montable et démontable du fait que les dispositifs d'amarrage 17 et 18 sont amovibles. Il se trouve de plus bloqué lors de la fermeture des portes, ce qui assure à l'ensemble du dispositif de compartimentage une bonne stabilité et un obstacle infranchissable pour l'animal qui se trouve dans le coffre ou sur la banquette arrière.

Naturellement, le dispositif qui vient d'être décrit n'est donné qu'à titre indicatif et l'on pourrait adopter d'autres mises en oeuvre de la présente invention sans sortir pour autant du cadre de celle-ci.

## Revendications

1. Dispositif notamment destiné au compartimentage transversal de l'habitacle arrière d'une voiture automobile présentant notamment des gouttières de toit, une porte arrière de coffre, des montants de bâti compris entre les portières avant et arrière utilisables en l'absence de gouttières comportant un filet souple, caractérisé par le fait qu'il comprend des mêmes moyens d'amarrage amovibles des coins supérieurs du filet, soit aux gouttières de toit du véhicule, soit au joint de la porte arrière du coffre du véhicule, soit aux montants du bâti compris entre les portières avant et arrière et que ces moyens d'amarrage sont uniques et dissociables.

2. Dispositif selon la revendication 1, caractérisé par le fait que les moyens d'amarrage sont constitués par un crochet et un lien souple multibrin solidaire du coin supérieur du filet.

3. Dispositif selon la revendication 2, caractérisé par le fait que les moyens d'amarrage au niveau de la gouttière du toit du véhicule sont un crochet et un lien multibrin souple pincé entre le bâti et la portière du véhicule.

4. Dispositif selon la revendication 2, caractérisé par le fait que le lien souple multibrin est dissociable pour servir de moyens d'amarrage du filet sur le montant du bâti compris entre les portières avant et arrière du véhicule en l'absence de gouttières.

5. Dispositif selon la revendication 2, caractérisé par le fait que le lien souple plus long est obtenu à prtir du lien souple multibrin.

6. Dispositif selon la revendication 4, caractérisé par le fait que le lien souple plus long s'enroule autour du montant du bâti compris entre les portières avant et arrière du véhicule.

7. Dispositif selon la revendication 2, caractérisé par le fait que les moyens d'amarrage comprennent un lien souple multibrin équipé d'un anneau relié au coin supérieur du filet et d'un manchon amovible sur la partie du lien à l'opposé du noeud.

8. Dispositif selon la revendication 4, caractérisé par le fait que les moyens d'amarrage sont constitués de plusieurs liens souples plus longs enroulés à différentes hauteurs de chaque montant du bâti compris entre les portières avant et arrière du véhicule.

9. Dispositif selon la revendication 6, caractérisé par le fait que le lien souple plus long est pincé entre le bâti et les por tières du véhicule.

FIG 1

FIG 2

FIG 3

FIG 4

FIG 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 250 326  (VANDAMME)<br>* En entier * | 1-3 | B 60 J    7/24 |
| X | FR-A-2 438 562  (VANDAMME)<br>* En entier * | 1-3 | |
| X | FR-A-2 474 976  (VANDAMME)<br>* En entier * | 1,2 | |
| X | GB-A-  188 932  (STANDARD MOTOR)<br>* En entier * | 1 | |

|  |
|---|
| DOMAINES TECHNIQUES RECHERCHES (Int. Cl.4) |
| B 60 J<br>B 60 R |

Le présent rapport de recherche a été établi pour toutes les revendications

| Lieu de la recherche | Date d'achèvement de la recherche | Examinateur |
|---|---|---|
| LA HAYE | 16-06-1986 | SCHMITTER J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82